(19) Europäisches Patentamt
European Patent Office
Office européen des brevets

(11) EP 1 511 207 A2

(12) EUROPEAN PATENT APPLICATION

(43) Date of publication:
02.03.2005 Bulletin 2005/09

(51) Int Cl.7: **H04J 14/02**, H04J 1/12

(21) Application number: **04019731.1**

(22) Date of filing: **19.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **26.08.2003 US 649007**

(71) Applicant: **Harmonic, Inc.**
**Sunnyvale, CA 94089-1140 (US)**

(72) Inventor: **Coppinger, Frederic M.A.**
**San Jose, CA 95125 (US)**

(74) Representative:
**Kirschner, Klaus Dieter, Dipl.-Phys.**
**advotec.**
**Böck, Tappe, Kirschner**
**Patent- und Rechtsanwälte**
**Sollner Strasse 38**
**81479 München (DE)**

(54) **Method and apparatus to reduce second order distortion in optical communications**

(57) Method and apparatus to reduce composite second order (CSO) non-linearity and/or dispersion degradation in multi-wavelength optical communications systems. Optical communication systems using optical fibers are prone to suffer from undesirable distortion due to composite second order distortion caused by self phase modulation, cross phase modulation; and the optical Keu effect in conjunction with polarization dependence loss. Introduction of a delay (phase shift) between the two optical signals in a dual optical signal system has been found to reduce or suppress the composite second order distortion. The delay shift is provided in either the electrical (RF) mode or in the optical mode. This delay is typically provided in a transmitter or a repeater in an optical system. The typical amount of the delay is half a wavelength of the high frequency RF modulation or for a typical system operating with RF signal up to 550 MHz, one nanosecond of delay. This amount of delay can be provided with approximately a 20 centimeter length of optical fiber in the transmitter. This delay is applied to only one of the two wavelengths, thus providing the desired phase shift.

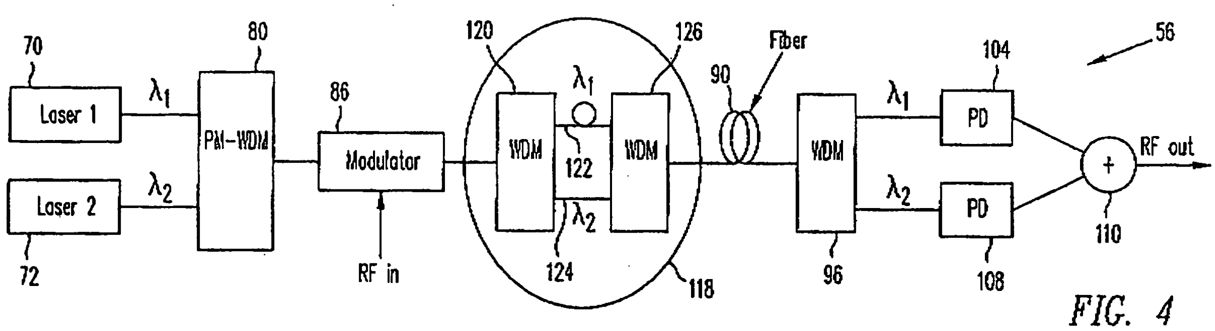


FIG. 4

EP 1 511 207 A2

## Description

FIELD OF THE INVENTION

This invention relates to optical communications and especially to reducing distortion in optical communications.

BACKGROUND

FIG. 1 shows a conventional optical (light) analog communications system of the type used in cable television (CATV). A 1550 nm DFB (distributed feedback) laser 70 is externally modulated using a lithium niobate modulator 86. The laser beam is first phase modulated by a high frequency "SBS" tone supplied to the modulator 86 in order to suppress Stimulated Brilloui Scattering (SBS). The beam is then intensity modulated by the RF (radio frequency) signal which is the information bearing signal, such as a television signal which includes various CATV channels. The RF signal is predistorted by an electronic predistortion circuit 78 to compensate for the third order non-linearities of the modulator 86. The two output signals from modulator 86 are 180° out of phase. At the output port of the modulator, one output signal is amplified by an optical amplifier such as an EDFA (erbium doped fiber amplifier) and transmitted in single mode (SMF) optical fiber span 90, 94. One, two or more additional optical amplifiers 92 are provided depending on the span length. The signal is then conventionally detected at the remote receiver 56.

In order to improve carrier to noise ratio, multi-wavelength optical systems have been proposed (see for instance U.S. Patent 5,940,196 PIEHLER et al. and U.S. Patent 5,278,688 BLAUVELT et al., both incorporated herein by reference in their entireties). In such systems the laser beams can be combined upstream of the modulator, as shown in FIG. 2a (from PIEHLER et al.) or after the modulator as shown in FIG. 2b (from BLAUVELT et al.) In FIG. 2a two light sources, typically lasers 70 and 72 (such as distributed feedback lasers), output respectively optical signals of wavelength $\lambda_1$ and $\lambda_2$. These are applied via waveguides 74 and 76 to a wavelength division multiplexer (WDM) 80 which is coupled via waveguide 82 to a conventional RF modulator 86. These modulated signals are then carried via the optical fiber span 90 to remote receiver 56 which includes a second wavelength division multiplexer 96 which outputs the signals along waveguides 98 and 100 and connects them to respectively photo detectors 104 and 108 detecting wavelengths $\lambda_1$ and $\lambda_2$. The electrical (RF) signals output from photo detectors 104 and 108 are then combined in radio frequency combiner 110 to provide the RF (CATV) output signal.

In Fig. 2b, an RF signal source 111 drives (modulates) each of lasers 110 which are connected in parallel so as to output, on waveguides 112, modulated optical signals. These are combined in optical coupler 113 and transmitted along the optical span to the receiver end along waveguides 114 to respectively receivers 115. In FIG. 2b the combination of optical signals is performed subsequent to (downstream of) the RF modulation.

The second order (CSO) distortion generated in optical fiber in a multi-wavelength optical communications system is believed to include three major sources which are respectively self phase modulation (SPM), cross phase modulation (XPM), and optical Kerr effect (OKE) in conjunction with polarization dependence loss (PDL). SPM is considered to be one of the main technical problems in a long optical fiber scan with high launch power for a single wavelength transmitter. SPM is a non-linear optical phenomenon in which the optical phase of an optical wave varies with the intensity of the light. This non-linear phase variation phase is given by the formula:

$$\phi^{NL} = (2\pi AZn_2/\lambda)\ (P(t)) \tag{1}$$

where Z is the distance propagated, A the effective area (cross section) of the optical fiber, $n_2$ the non-linear refractive index, $\lambda$ the wavelength of the light, and P the optical power being modulated by the RF signal as it varies with time t.

In effect, when the wave propagates through the optical fiber SPM creates a "chirp" that depends on the intensity of the propagated light signal. Dispersion in the fiber then transforms the chirp into an intensity modulation at sum and difference frequencies of the fourier components on the fundamental signal P(t). These new frequency components are called the composite second order (CSO) distortion. In digital and analog CATV networks CSO is a measurement of degration of signal quality.

SPM dispersion-induced CSO has been studied: see Phillips, et al., IEEE Photonics Technology Letters, vol. 3, p. 489 (1991). The second order non-linearity introduced by the SPM dispersion for a single wavelength transmitter is given by:

$$2\ NL_{Amp} = -0.5\ P_{in}\ (Z_{eff})^2\ \beta_2\ k\ \frac{n_2}{A_{eff}}\ m\ (2\ \pi\ f_d)^2 \tag{2}$$

The resulting CSO intensity is then given by:

$$CSO = N_{CSO}[\frac{1}{2}\ P_{in}\ (Z_{eff})^2\ \beta_2\ k\ \frac{n_2}{A_{eff}}\ m\ (2\ \pi\ f_d)^2]^2 \tag{3}$$

where

$N_{CSO}$ is the CSO beat count
$P_{in}$ is the launched optical power
$\beta_2$ is the 2nd derivative of the propagation constant (related to the dispersion (D) by $\beta_2 = D\lambda^2/(2\pi c)$)
$k=2\pi/\lambda$ where $\lambda$, is the laser wavelength.
$n_2$ is the non-linear refractive index
m is the modulation index
$A_{eff}$ is the effective area of the fiber.
$f_d$ is the frequency where the CSO occurs.
$(Z_{eff})^2$ is the square of the effective length of fiber (fiber length corrected for the losses), if one EDFA is used just after the transmitter, and $(Z_{eff})^2$ is defined by:

$$(Z_{eff})^2 = \frac{\alpha L - 1 + e^{-\alpha L}}{\alpha^2} \tag{4}$$

where L is the fiber length and $\alpha$ the fiber attenuation.

For an 80 channel CATV system having a 50km long fiber link with one 17dBm EDFA located just downstream of the transmitter, the CSO at 547MHz due to SPM dispersion is about -64dBc. If a link of 100km length is used with an additional 17dBm EDFA located at 50km from the transmitter, the CSO is about -54dBc.

Cross Phase Modulation (XPM) is similar to Self Phase Modulation (SPM), except the optical phase of one wavelength is modulated by the optical power of the other wavelength. When two optical signals propagate in the same optical fiber the non-linear phase shift generated by the two signals due to SPM and XPM is:

$$\phi_i^{Nl} = (2\pi A Z n_2/\lambda_i)\ (P_i(t) + bP_j(t)) \tag{5}$$

where the indices *i* and *j* refer to the signal *i* or *j*, $P_i$ and $P_j$ are the power of signals *i* and *j*, *b* is a parameter that depends on polarization, and is equal to 2 when the polarizations are aligned and 2/3 when the polarization are perpendicular. The first term in the second parentheses corresponds to SPM and the second term to XPM.

The CSO generated by the non-linear phase shift of the combined effect of SPM and XPM can be calculated numerically using the split-step Fourier technique (see G. Agrawal, "Non Linear Fiber Optic" second edition, Academic Press, or F. Coppinger, et al., "Proceedings, Optical Fiber Communication, 2001, paper WCC2-1. FIG. 3 shows (see key to FIG. 3) the calculated CSO as a function of distance when launching 16dBm into optical fiber with only one wavelength, two wavelengths at 16dBm each with parallel polarization, and two wavelengths at 16dBm with perpendicular polarization. The two wavelengths carry the same information (i.e., the RF signal phase is the same for the two wavelengths). The CSO distortion is shown for NTSC CATV channel 78 (547.25 MHz) which is a high frequency end of the CATV RF channel allocation. CSO generated by SPM and XPM is worse at higher frequency channels.

Clearly the use of two wavelengths significantly increases the CSO distortion. In FIG. 3, it is assumed that one of the wavelengths is delayed at the receiver side to compensate for the dispersion in the fiber (the delay element is not however depicted).

Another source of CSO distortion in a dual wavelength fiber link is the above-mentioned optical Kerr effect combined with polarization dependence loss (OKE-PDL). The optical Kerr effect modulates the polarization of one wavelength with the intensity of the other wavelength, leading to intensity to polarization modulation. When there is a polarization dependent loss (or gain) element before the receiver, the polarization dependence loss multiplies the signal with itself and therefore generates distortion. OKE-PDL has been studied in Phillips and Ott, Journal of Lightwave Technology JLT, Vol. 17, p. 782, (1999). The CSO distortion generated by OKE-PDL is at a minimum if the two wavelengths are transmitted with their two states of polarization either parallel or perpendicular. It is at the maximum if the polarization difference between the two wavelengths is at 45 degrees. In this later case the CSO distortion would vary as a function of time as the polarization state between the two wavelengths will vary as a function of time due to different temperatures or mechanical stress of the fiber. Note that the CSO distortion generated by OKE-PDL only occurs if PDL is present in the optical link; it is minimized when low PDL optical components are used.

The present invention is directed to a method and apparatus which reduce CSO distortion induced by SPM, XPM and dispersion in a multiple wavelength optical communication system.

This object is achieved by the method of claim 1 and the apparatus of claim 6. Advantageous embodiments of the invention are characterized in the sub-claims. The present invention provides the desired effect by using a delay to launch the multiple optical (light) signals (each having different wavelengths) at different RF phases. Using the delay introduces an RF phase shift proportional to the RF frequency. In this case "phase" merely refers to the relative delay between two signals which are otherwise carrying the same information. If the number of wavelengths is increased, an incremental delay could be introduced between each wavelength. Preferably, the shift is in the range of about 0.25 to 4 ns. CSO distortion generated by dual wavelength operation in an optical system is worse than with a single wavelength in that the non-linear optical phase shift generated by SPM combines positively with the optical phase shift generated by the XPM when the two wavelengths carry exactly the same information, e.g. in the RF domain, as in FIGS. 2a, 2b. Referring to equation 5 above, if the two optical signals have identical power levels, identical polarizations as well as the same variation with time, the optical phase shift will be triple compared to that of single wavelength operation. The variation is multiplied by 5/3 when the polarizations are perpendicular.

To produce this effect therefore, in accordance with the invention the two optical signals are phase shifted by the equivalent 180 degrees of the highest frequency RF signal. That is, one of the optical signals is delayed by the equivalent of half a wavelength in terms of the highest RF frequency information carried by the two signals. In one embodiment at the transmitter (or repeater) there are two lasers outputting optical signals at two slightly separated wavelengths. The two optical signals are then applied to a modulator and are modulated by the same RE input signal, which is the information carrying signal. The modulated optical signals are then applied to a first wavelength division multiplexer splitting the signal into the two wavelengths. The two wavelengths are carried in different paths, one of which includes a delay device such as a short length of optical fiber providing the required delay. The two signals on their respective paths, one signal delayed relative to the other, are applied to the input terminals of a second wavelength division multiplexer which outputs on the optical fiber span the combined signal which is transmitted to the remote conventional optical receiver which conventionally splits up the received optical signal into the two wavelengths which are then respectfully photo detected and output as in FIG. 2a. In other embodiments the delay is provided in the RF domain, that is the RF signal is split into two paths to one of which the delay is applied and then the signal in each of the two paths is used to modulate one of two lasers, each operating at one of the two respective wavelengths.

This approach can be used either in the head end optical transmitter or in a repeater in a middle of a long optical fiber span. Thus in accordance with the invention a first optical signal is provided having a first center wavelength and a second optical signal is provided having a second, slightly different center wavelength. Both optical signals are modulated by the same information signal and carried in an optical fiber span or other optical communications channel. The phase of the RF information in the first optical signal is delayed relative to the phase of the RF information in the second optical signal. When the phase shift is applied in the middle of a span the RF phase shift is done only in the optical domain. The actual amount of delay is determined theoretically or experimentally, as described in further detail below. It has been found that a delay of about half a wavelength of the high frequency RF channel (typically 550 MHz) is useful; however this is not limiting.

## BRIEF DESCRIPTION OF THE DRAWINGS

FIG. 1 shows a conventional optical analog communication system as used in cable television.

FIG. 2a shows a known two wavelength communication system which is an improvement over that of FIG. 1.

FIG. 2b shows a second known multi-wavelength communications system.

FIG. 3 shows a plot of transmission span distance (horizontal axis) vs. CSO distortion in channel 78 (vertical axis).

FIG. 4 shows an embodiment of an optical communication system in accordance with the invention.

FIG. 5 shows a plot of the delay (horizontal axis) vs. CSO distortion (vertical axis) in accordance with the invention.

FIG. 6 shows an optical transmitter in accordance with the invention.

FIG. 7 shows another version of an optical transmitter in accordance with the invention.

FIG. 8 shows yet another optical transmitter in accordance with the invention.

Similar reference numerals in various figures are intended to refer to similar elements or components.

DETAILED DESCRIPTION

FIG. 4 shows one embodiment of an optical system in accordance with this invention which is essentially the same as that of FIG. 2a, with like elements similar labeled, but with the addition of a delay device 118 including an additional wavelength division multiplexer 120 connected to a third wavelength division multiplexer 126 in the transmitter portion of the system. These two WDMs 120, 126, in delay device 118 as shown, are connected port-to-port by two optical waveguides 122, 124 which are, for instance, short lengths of optical fiber or similar coupling components. However, the upper optical waveguide 122 is longer than the lower one, 124 and hence is a delay element. The delay is provided by, e.g., a short additional length of optical fiber. The typical length of delay is for instance one nanosecond as described above and this can be, as shown in waveguide 122, readily provided by approximately 20 cm of conventional optical fiber. In FIG. 4 the dual wavelength transmitter includes the two lasers 70, 72 which are typical conventional optical sources. The output optical signals are coupled into a waveguide using the polarization maintaining wavelength division multiplexer 80. The two signals are thereby combined and coupled into the conventional modulator 86 where they are modulated by the RF input signal, which is the information bearing signal. If at the output of the modulator the two RF signals carried by the two wavelengths are in phase, as described above for FIG. 2a, this would give the maximum undesirable CSO distortion if coupled into the fiber span.

In accordance with the method and apparatus described here, instead the two RF signals carried by the two optical signals are forced to be out of phase, that is one optical signal is delayed relative to the other. In order to do this, the two optical signals are separated in WDM 120 and one optical signal (that on waveguide 122) is delayed relative to the other and the two optical signals are then recombined by the third WDM 126. Note that the resulting RF phase shift is frequency dependent and is greater for higher frequency. By doing so when launched into the main optical fiber span the CSO distortion generated by SPM, XPM and dispersion is reduced or suppressed. The receiver 56 of this system is the same as that in FIG. 2a.

Note that in one variant of the Figure 4 receiver 56, a single photodiode is capable of receiving both optical signals $\lambda_1$, $\lambda_2$.

We have determined that the CSO distortion at any distance along the fiber span is dependent on the time delay (phase shift). FIG. 5 is a graph showing the calculated (theoretical) CSO distortion as a function of the time delay for a 50 km long optical fiber span having a launch power of the optical signal of 16 dBm per wavelength. The difference between the two wavelengths here is about 1.6 nanometers; exemplary wavelengths are 1558.98 nm and 1560.61 nm. In this case the phase delay is provided to the signal having the shorter of the two wavelengths. The CSO distortion of FIG. 5 is calculated for channel 78 which is at 547 Mhz and assuming transmission of 80 channels of NTSC CATV as is typical in most U.S. commercial cable television systems. The plots in FIG. 5 are calculated for parallel polarization for the two wavelengths and also for perpendicular polarization of the two wavelengths, as shown in the FIG. 5 key. Also shown in FIG. 5 is the measured data indicated by the vertically extending solid lines. The launch polarization was varied during these measurements and the range of variation of the CSO distortion was measured. FIG. 5 shows that the CSO distortion is significantly reduced using a phase delay, in this case of approximately one nanosecond. This is the intended result, as confirmed by both the theoretical considerations and the measured data shown in FIG. 5.

FIG. 6 shows another transmitter portion of an optical communications system in accordance with the invention using two optical transmitters 130, 132 again of two different wavelengths, where each transmitter is a laser plus associated conventional components. Transmitter 130 outputs wavelength $\lambda_1$ and transmitter 132 outputs wavelength $\lambda_{2;}$ both transmitters are modulated by an RF signal from RF source 128. The optical signals are output on waveguides 134, 136 to optical coupler 138 and hence to the optical fiber span. In this case the phase delay is introduced in the optical domain as shown in the upper waveguide 134 path carrying the signal of wavelength $\lambda_1$. The coupler could be a 3dB combiner or more preferably a WDM combiner.

FIG. 7 shows a different transmitter in accordance with the invention where the phase delay is introduced in the electrical (RF) domain. Here the RF signal from the RF source 128 is applied to transmitter (laser) 130 using an RF transmission path 140 which includes an RF delay device. There is no such delay device present in the lower RF transmission path 142 where the same RF signal drives transmitter 132. An example of an RF delay device is for instance a length of coaxial cable or other well-known RF delay element such as a delay line. In the optical domain, a typical delay element is a length of optical fiber between the two WDMs. Also, an optical chirp grating or a length of dispersion compensating fiber can be used as the delay device in the optical domain to create the delay between the two wavelengths.

The methods and apparatus disclosed here can also use polarization maintaining optical fiber for the delay element in the optical domain. Using polarization maintaining fiber and also polarization maintaining wavelength division multiplexers improves control of the polarization of the optical signals and ensures that the wavelengths of the two optical signals are launched with either parallel or perpendicular polarization. In effect, launching the two wavelengths with parallel or perpendicular polarization reduces the effect of the optical Kerr effect and polarization dependence loss as described above. In addition, launching two wavelengths at known polarization enables an accurate calculation of

nonlinear effects via equation 5, compared to the case of random polarizations.

Using a time delay to achieve the desired phase shift gives a frequency dependent phase shift. The phase shift can also be achieved in yet another transmitter by using the two output signals from the optical modulator. When using two lasers 70, 72 driving one conventional Mach Zender external modulator 80, the modulator 80 typically provides two optical output signals (see FIG. 8). The RF information carried by one of the optical outputs is out of phase by 180 degrees with respect to the other output, i.e. one output is "RF inverted" compared to the other.

As shown in the transmitter of FIG. 8, which is partly similar to that of FIG. 4, the two optical signals output from the modulator 86 are coupled to two wavelength division multiplexers 146, 148 in order to be separated into the two optical signal wavelengths $\lambda_1$ and $\lambda_2$. One optical signal, of the first wavelength, provided from one output is then combined with the other optical signal. The resulting optical signals contain two different wavelengths with the RF information phase 180° shifted between the two RF signal carried by the two optical beams over all RF frequencies. The FIG. 8 transmitter has been found to significantly reduce the CSO distortion due to XPM and SPM. Note there is no explicit delay element shown here, but the arrangement of the WDMs 146, 148, 150, 152 provides the phase shift, hence this transmitter also includes a phase shifting device. In Figure 8, the subscript "+" refers to the upper output of the modulator 86 and "-" refers to the other output of modulator 86. Each modulator 86 output has two wavelengths $\lambda_1$, $\lambda_2$. The RF information carried by one modulator output is 180 degrees out of phase with the other output

While the above description is for a system that minimizes CSO distortion, a similar arrangement compensates for dispersion in the optical fiber span. This allows a wide variety of single photodiode receivers to achieve a minimum high channel CNR (carrier to noise ratio) degradation due to the optical fiber dispersion. Using a system similar to that in Figure 4, in one example a launch power of 20dB is provided per wavelength into the optical fiber span 90. The RF carrier signals are delayed by delay device 118 so as to add coherently, providing a value of, e.g.+6dB. Noise caused by dispersion in the span 90 adds incoherently, and has a value of, e.g., 3dB. The delay (phase shift) supplied by the delay device advantageously increases the CNR by up to 3dB. If each wavelength has, e.g., 17dbm of SBS (Stimulated Brillouin Scattering) suppression, then the sum of the two optical signals advantageously has 20 dBm of SBS suppression thereby providing the desired dispersion compensation.

The invention is not limited to dual wavelength optical systems as described above, but is applicable to systems carrying three or more optical wavelengths. With more than two wavelengths, an incremental time delay is applied between the wavelengths such that the sum of the different RF frequency signals carried by the different wavelengths becomes independent of the time for high frequency channels. In the following equation, the non-linear optical phase shift for wavelength *i* in such a multi-wavelength system is:

$$\phi_i^{NL} = (2\pi A Z n_2 / \lambda_i\ )\left[P_i(t) + \sum_{j\neq i} b_j P_j(t-\tau_j)\right] \qquad (6)$$

Where $P_i(t)$ is the optical power for wavelength i, $b_j$ is a coefficient that depends on the polarization of wavelength j compared to wavelength i, and $\tau_j$ is the time delay introduced between wavelength j and wavelength i. The time delays between the wavelengths are chosen such that the sum in the brackets of equation 6 becomes independent of the time. Such a system would be an extension of that of e.g. Figure 4 with an additional third laser source and an additional delay device for the third optical wavelength.

This disclosure is illustrative and not limiting. Further modifications to the invention will be apparent to one skilled in the art in light of this disclosure and are intended to fall within the scope of the appended claims.

## Claims

1. A method of transmitting in an optical, communication channel, comprising:

   providing a first optical signal ($\lambda_1$) having a first center wavelength;
   providing a second optical signal ($\lambda_2$)having a second center wavelength;
   modulating the first and second optical signals by an information signal (RF in); and
   propagating the first and second modulated optical signals in the optical communications channel;

   wherein the phase of the information carried by the first optical signal is shifted relative to the phase of the information carried by the second optical signal.

2. The method of claim 1, wherein the shift is a predetermined delay sufficient

a) to suppress composite second order distortion in the channel, or
b) to compensate for dispersion in the optical communications channel, or
c) to minimize CNR degradation in the channel.

**3.** The method of claim 1, further comprising the acts of:

providing a third optical signal having a third center wavelength; modulating the third optical signal by the information signal; and
propagating the third modulated optical signal in the optical communications channel;

wherein the phase of the Information carried by the third optical signal is shifted relative to the phase of the information carried by the first and second optical signals.

**4.** The method of claim 1, further comprising the act of determining an amount of the shift as a function of the length of the optical communications channel and the wavelengths of the optical signals.

**5.** The method of claim 1, wherein the first optical signal has a shorter wavelength than the second optical signal.

**6.** Apparatus for transmitting in an optical communications channel (90), comprising:

a source (70) of a first optical signal ($\lambda_{1)}$ having a first center wavelength;
a source (72) of a second optical signal ($\lambda_2$) having a second center wavelength;
a source of an information signal (CRF in) coupled to modulate the first and second optical signals, wherein the modulated first and second optical signals are coupled to the optical communications channel (90); and
a delay device (118) coupled to delay a phase of the first optical signal relative to the phase of the second optical signal.

**7.** The apparatus of claim 6, wherein the delay device includes one of an optical delay element or a radio frequency delay element.

**8.** The apparatus of claim 7, wherein the optical delay element is selected from a group consisting of a length of optical transmission media, a chirp grating, a length of dispersion compensation optical fiber, and a length of optical fiber with either high positive or high negative dispersion.

**9.** The apparatus of claim 6 or 7, wherein the delay device comprises a first wavelength division multiplexer (120) coupled to a first end of a length of optical transmission media (122), and a second wavelength division multiplexer (126) coupled to a second end of the length of optical transmission media (122).

**10.** The apparatus of claim 7, wherein the radio frequency delay element is coupled between the source of the information signal and the source of the first optical signal.

**11.** The apparatus of claim 12, wherein the delay is provided by an optical modulator (86) in combination with a plurality of wavelength division multiplexers (120, 126) outputting the first and second optical signals.

**12.** The apparatus of claim 11, further comprising

a first wavelength division multiplexer (180) coupled to the sources of the first and second optical signals; and
a modulator (86) coupled to receive the information signal and thereby to modulate signals from the first wavelength division multiplexer;

wherein the delay device includes:

a second wavelength multiplexer (120) coupled to an output port of the modulator; and
a third wavelength division multiplexer (126) coupled to receive signals output from the second wavelength division multiplexer.

**13.** The apparatus of claim 7 or 12, wherein the optical delay element is coupled between the channel and the source of the first optical signal.

**14.** The apparatus of claim 6, further comprising a modulator (86) coupled to receive the information signal, thereby to modulate the optical signals, and wherein the delay device comprises a plurality of wavelength division multiplexers (120, 126) coupled to an output port of the modulator.

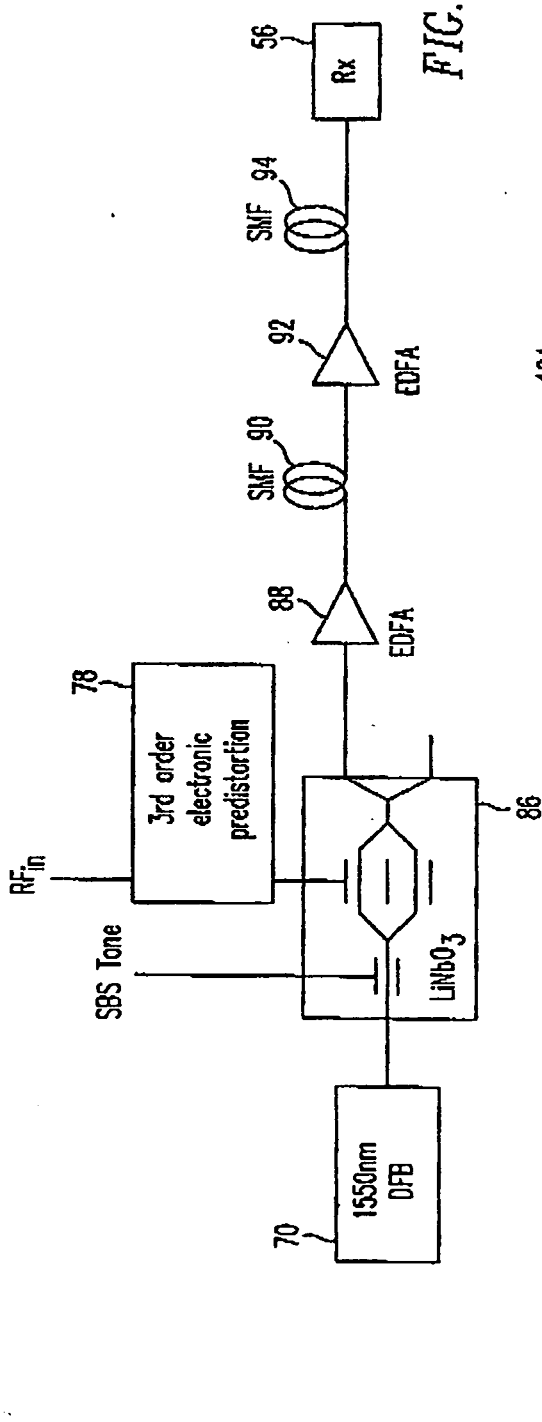
56
Rx
SMF 94
92
EDFA
SMF 90
88
EDFA
78
3rd order electronic predistortion
RFin
SBS Tone
86
LiNbO3
70
1550nm DFB

FIG. 1

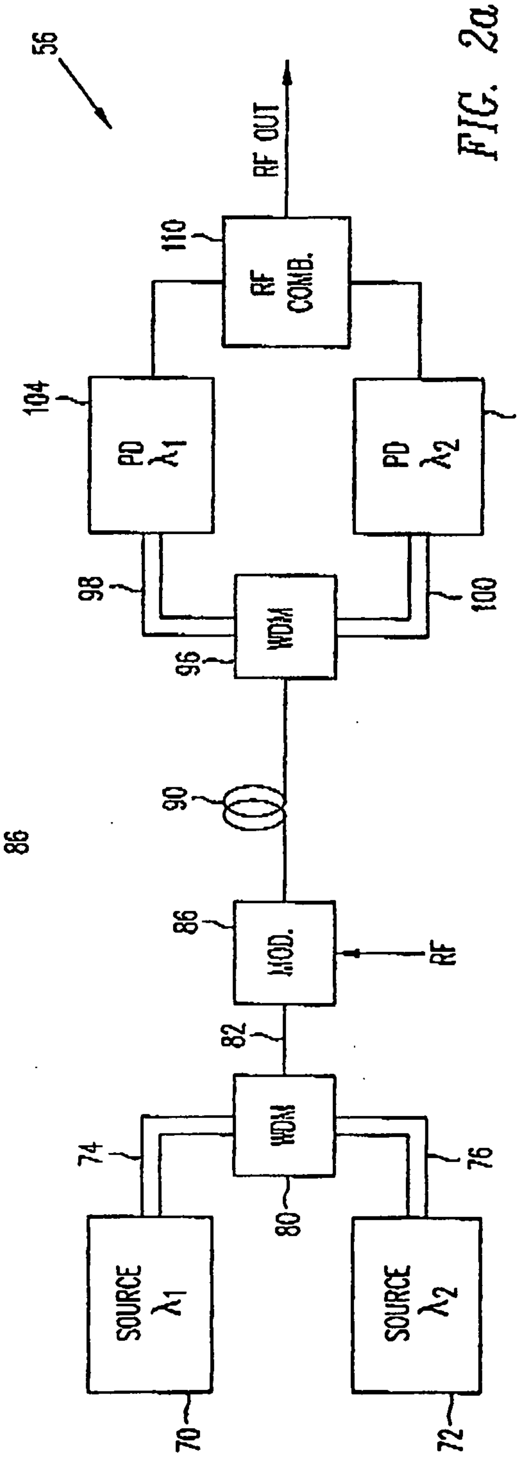
56
RF OUT
110
RF COMB.
104
PD λ1
108
PD λ2
98
100
96
WDM
90
86
MOD.
RF
82
74
76
WDM
80
SOURCE λ1
SOURCE λ2
70
72

FIG. 2a

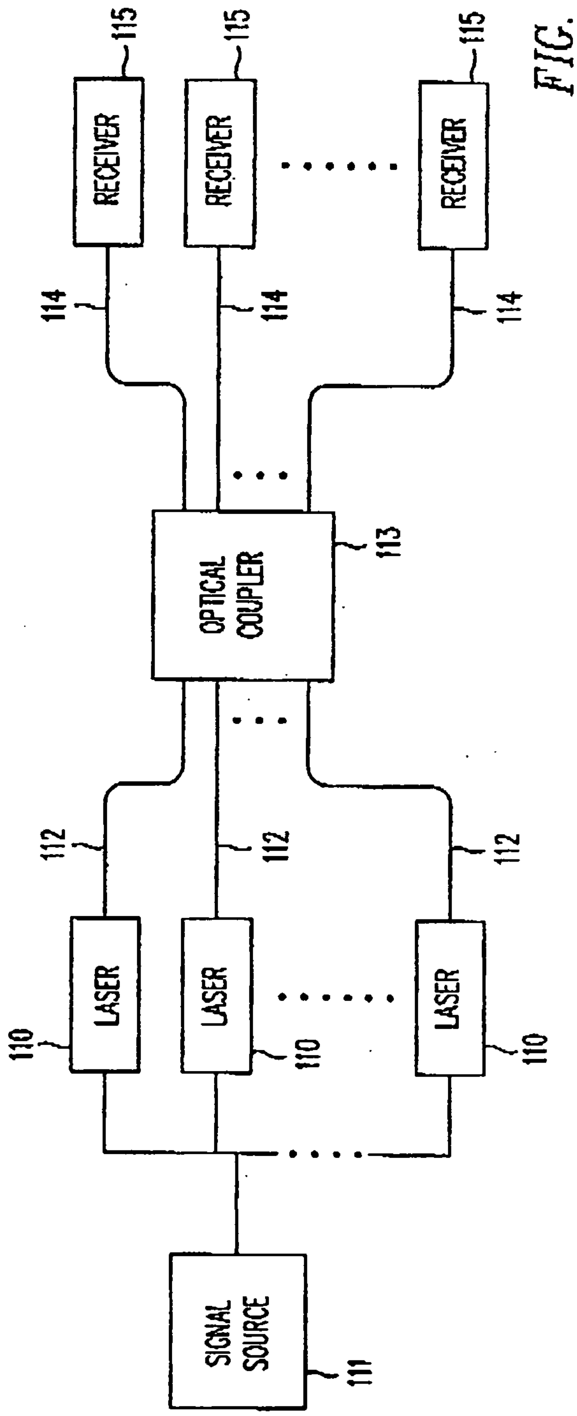
RECEIVER
RECEIVER
RECEIVER
115
115
115
114
114
114
OPTICAL COUPLER
113
112
112
112
LASER
LASER
LASER
110
110
110
SIGNAL SOURCE
111

FIG. 2b

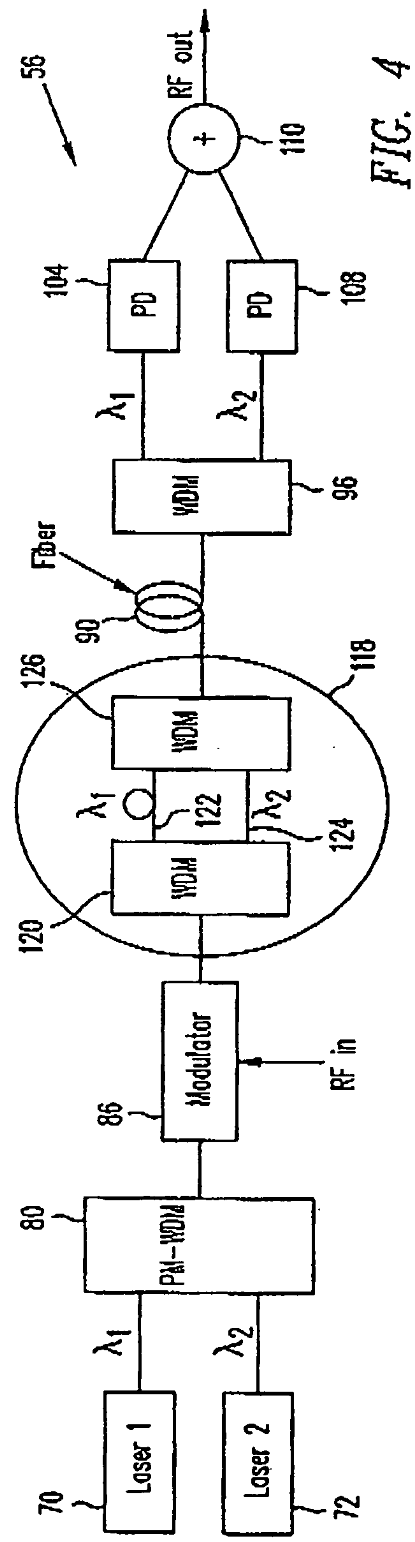
56
RF out
110
104
PD
PD
108
λ1
λ2
WDM
96
Fiber
90
118
126
WDM
λ1
122
λ2
124
WDM
120
Modulator
86
RF in
80
PM-WDM
λ1
λ2
Laser 1
Laser 2
70
72

FIG. 4

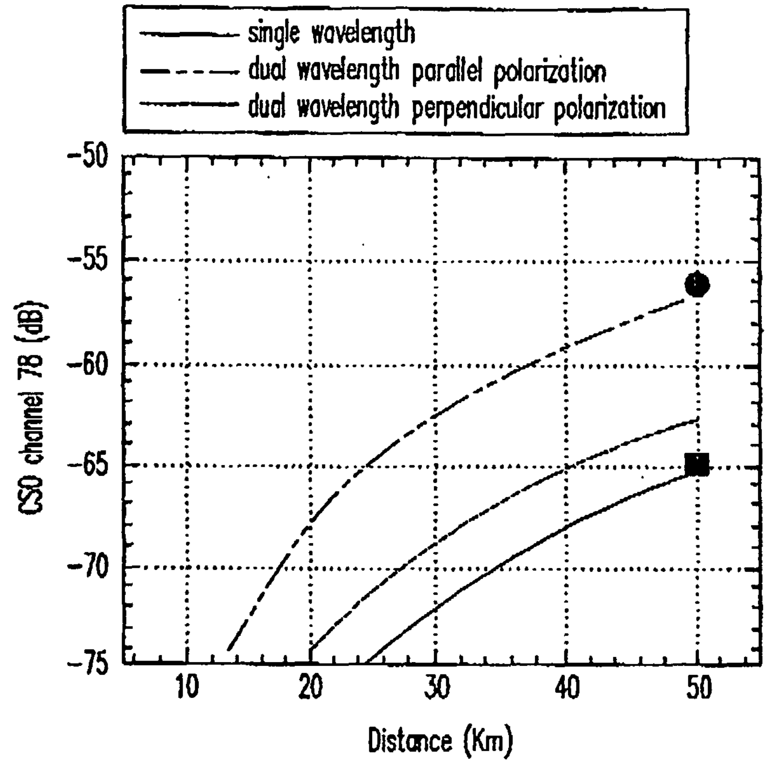
single wavelength
dual wavelength parallel polarization
dual wavelength perpendicular polarization
-50
-55
-60
-65
-70
-75
CSO channel 78 (dB)
10
20
30
40
50
Distance (Km)

FIG. 3

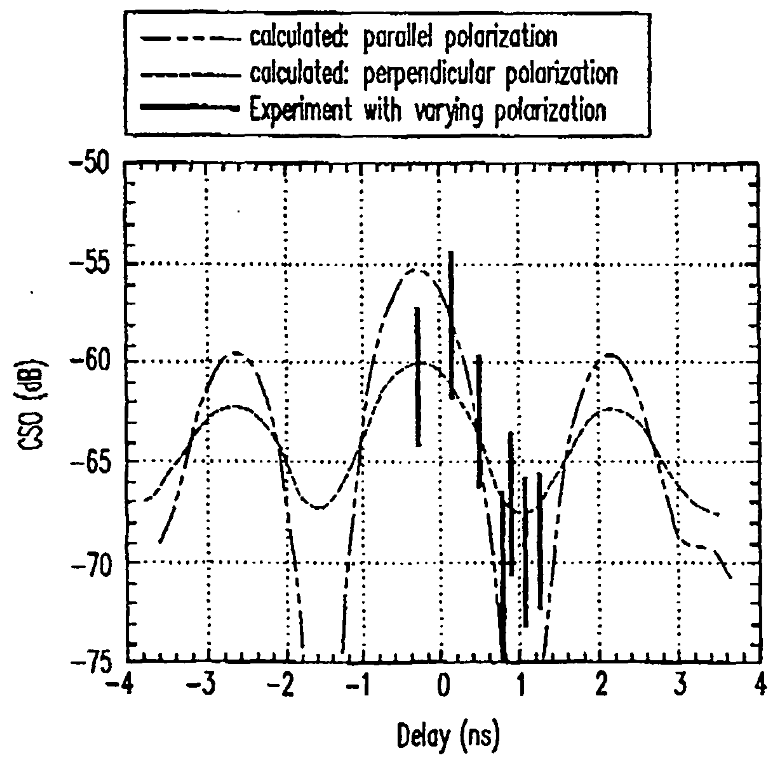
calculated: parallel polarization
calculated: perpendicular polarization
Experiment with varying polarization
-50
-55
-60
-65
-70
-75
CSO (dB)
-4
-3
-2
-1
0
1
2
3
4
Delay (ns)

FIG. 5

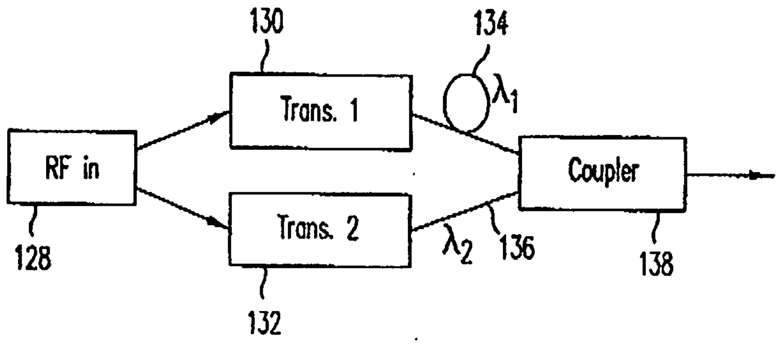


*FIG. 6*

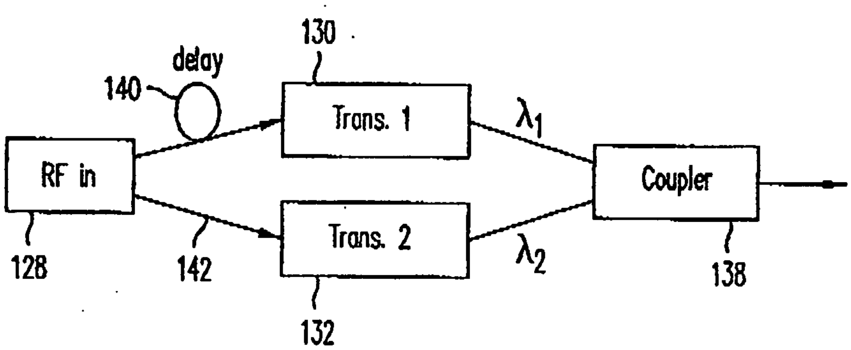


*FIG. 7*

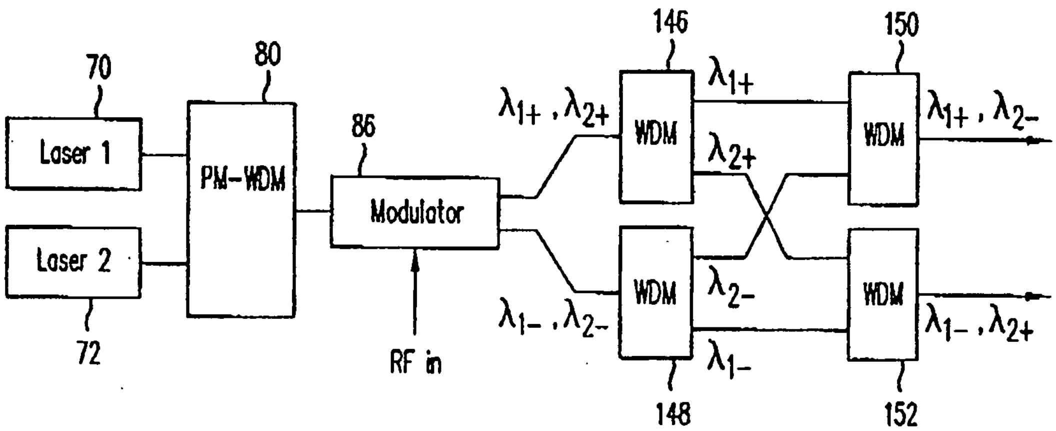


*FIG. 8*